# EUROPEAN PATENT SPECIFICATION

(11) **EP 2 266 749 B1**
(45) Date of publication and mention of the grant of the patent: **18.07.2012**
(21) Application number: 09723486.8
(22) Date of filing: 19.03.2009
(51) Int. Cl.: B23Q 11/00, B24B 41/04, B24B 55/02

(54) **ROTARY FLOW-THROUGH JOINT AND GRINDING APPARATUS**
ROTIERENDES DURCHFLUSSANSCHLUSSSTÜCK UND SCHLEIFVORRICHTUNG
RACCORD TOURNANT À ÉCOULEMENT TRAVERSANT ET APPAREIL DE MEULAGE

(30) Priority: 21.03.2008 JP 2008074380
(43) Date of publication of application: 29.12.2010
(73) Proprietor: Bosch Corporation, Tokyo 150-8360 (JP)
(72) Inventor: ANDO, Isao, Higashi-Matsuyama-shi Saitama 355-8603 (JP); NISHIZAWA, Taira, Higashi-Matsuyama-shi Saitama 355-8603 (JP); YAMADA, Takafumi, Higashi-Matsuyama-shi Saitama 355-8603 (JP); FURUKAWA, Hideo, Higashi-Matsuyama-shi Saitama 355-8603 (JP); UCHIDA, Mitsuru, Higashi-Matsuyama-shi Saitama 355-8603 (JP); YOKOTAKI, Yoshinori, Higashi-Matsuyama-shi Saitama 355-8603 (JP)
(74) Representative: Dreiss
(86) International application number: PCT/JP2009/055419
(87) International publication number: WO 2009/116620

(56) References cited:
- DE-A1- 10 013 729
- JP-A- 2000 271 865
- JP-A- 2002 321 138
- JP-A- 2002 321 138
- JP-A- 2007 007 493
- JP-A- 2007 007 493

## Description

### Technical Field

The present invention pertains in general, to a rotary joint and particularly relates to the improvement of high-speed rotation in a rotary joint that enables a grinding fluid or the like to flow therethrough.

In particular, the present invention relates to a rotary joint according to the preamble of claim 1 and a grinding device according to the preamble of claim 5. Such a rotary flow-through joint and grinding device are known from the document DE 100 13 729 A1. The features of the preamble of claim 1 are also known from the document JP 2007 007493, which discloses a mist generator adapted to generate mist from a liquid.

In machine tools such as grinding devices, a structure that circulates a grinding fluid (coolant) through the insides of grindstone spindles and grindstones and releases the grinding fluid to a working point of a workpiece has conventionally been well known, and it is common for a rotary joint that enables the grinding fluid to flow therethrough to be used in the spindle portions.

Incidentally, when such a rotary joint is used as a spindle, outflow of the grinding fluid from a gap portion between a rotating portion and a non-rotating portion of the rotary joint arises, so it is necessary to perform recovery thereof.

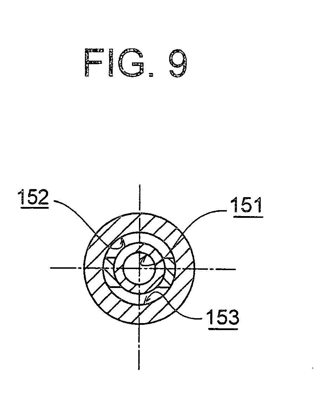

As a countermeasure for this, a configuration where, for example, a passage for recovering the grinding fluid and a passage for so-called air purging which, in order to suppress as much as possible outflow of the grinding fluid from the gap portion between the rotating portion and the non-rotating portion to the outside, pressure-feeds air to that gap portion are disposed inside the joint separately from a circulation passage of the grinding fluid is conceivable. For example, specifically, like the example shown in FIG. 9, a configuration where a grinding fluid-use passage 151 is formed in the central portion of a columnar member and where a drain passage 152 for grinding fluid recovery whose cross section is roughly C-shaped and an air purging-use passage 153 are formed around this grinding fluid-use passage 151 so as to surround it is conceivable.

However, when the aforementioned configuration is employed, there are the problems that this leads to an increase in the shaft diameter as a result of disposing the drain passage 152 and the air purging-use passage 153 around the grinding fluid passage 151, and particularly the circumferential velocity of the spindle shaft becomes large and promotes wear and the like in a rotary joint where high-speed rotation is required, which is undesirable.

Accordingly, it is an objective of the present invention to provide a rotary flow through joint as well as a grinding device as mentioned at the outset with a reduced wear.

With regard to the rotary joint, this objective is achieved by the rotary joint of claim 1. With regard to the grinding device, this objective is achieved by the grinding device of claim 5.

The present invention has been made in light of the above-described circumstances and provides a rotary flow-through joint that is equipped with plural flow-through paths without increasing its shaft diameter and enables high-speed rotation with reduced wear as a consequence of a small shaft diameter. The grinding device of the present invention is equipped with a spindle that enables sufficient release of a grinding fluid to a working point of a workpiece and enables high-speed rotation while reducing as much as possible the shaft diameter of a sliding portion, there by reducing wear*.*

According to the present invention, the non-rotating member flow-through path, the drain passage and the air-use passage are disposed parallel to each other inside the non-rotating member in the axial direction of the non-rotating member, and the shaft diameter of the connection insertion portion that becomes the portion connecting to the rotating member is formed in a small diameter, so the invention can provide a rotary flow-through joint that enables the necessary flow-through without having to raise the relative circumferential velocity with the rotating member at this portion.

In particular, when the non-rotating member flow-through path, the drain passage and the air-use passage are formed inside the non-rotating member at 120-degree intervals in the axial direction off-centered from the axial center and the shaft diameter of the connection insertion portion that becomes the portion connecting to the rotating member is formed in a small diameter such that part of the radial direction cross sections of the non-rotating member flow-through path, the drain passage and the air-use passage is clipped, the radial direction cross section of the non-rotating member flow-through path is secured large in comparison to those of the drain passage and the air-use passage, so the invention can provide a rotary flow-through joint that secures the necessary flow-through amount, reduces as much as possible the relative circumferential velocity with a rotating shaft as a result of the shaft diameter of this portion becoming smaller, and is more suited to high-speed rotation.

Further, by using the rotary flow-through joint in a spindle of a grinding device, the invention achieves the effect that it can provide a grinding device that enables sufficient release of a grinding fluid to a working point of a workpiece and with which securement of high-speed rotation is easy while reducing as much as possible the shaft diameter of a sliding portion.

### Brief Description of Drawings

FIG. 1(A) and FIG. 1(B) are views showing the overall configuration of a grinding device in an embodiment of the present invention, with FIG. 1(A) being a front view and FIG. 1(B) being a side view.
FIG. 2 is an overall perspective view showing a configuration example of main portions of the grinding device in the embodiment of the present invention.
FIG. 3 is a plan view showing the overall configuration of a rotary flow-through joint used in first to third grindstone spindles used in the grinding device shown in FIG. 1.
FIG. 4 is a radial direction sectional view of a shaft insertion portion of a fixed shaft used in the rotary joint shown in FIG. 3.
FIG. 5 is an axial direction longitudinal sectional view of the fixed shaft used in the rotary joint shown in FIG. 3 and is a sectional view along line X-X shown in FIG. 4.
FIG. 6 is a radial direction sectional view of the fixed shaft used in the rotary joint shown in FIG. 3 and is a sectional view along line B-B shown in FIG. 5.
FIG. 7 is a radial direction sectional view of the fixed shaft used in the rotary joint shown in FIG. 3 and is a sectional view along line C-C shown in FIG. 5.
FIG. 8 is a radial direction sectional view of the fixed shaft used in the rotary joint shown in FIG. 3 and is a sectional view along line D-D shown in FIG. 5.
FIG. 9 is a spindle radial direction sectional view showing a conventional configuration example when a drain passage and an air purging-use passage are disposed together with a grinding fluid-use passage in a spindle.

### Explanation of Codes

- 13: First Linear Motor
- 16: Second Linear Motor
- 101: First Slide Portion
- 102: Second Slide Portion
- 103: Workpiece Holding Portion
- 111: Shaft
- 112: Fixed Shaft
- 121: Connection-Use Recess Portion
- 122: Shaft Flow-Through Path
- 131: Grinding Fluid Flow-Through Path
- 132: Drain Passage
- 133: Air-Use Passage
- 134: Insertion Connection Portion

### Description of Specific Embodiment

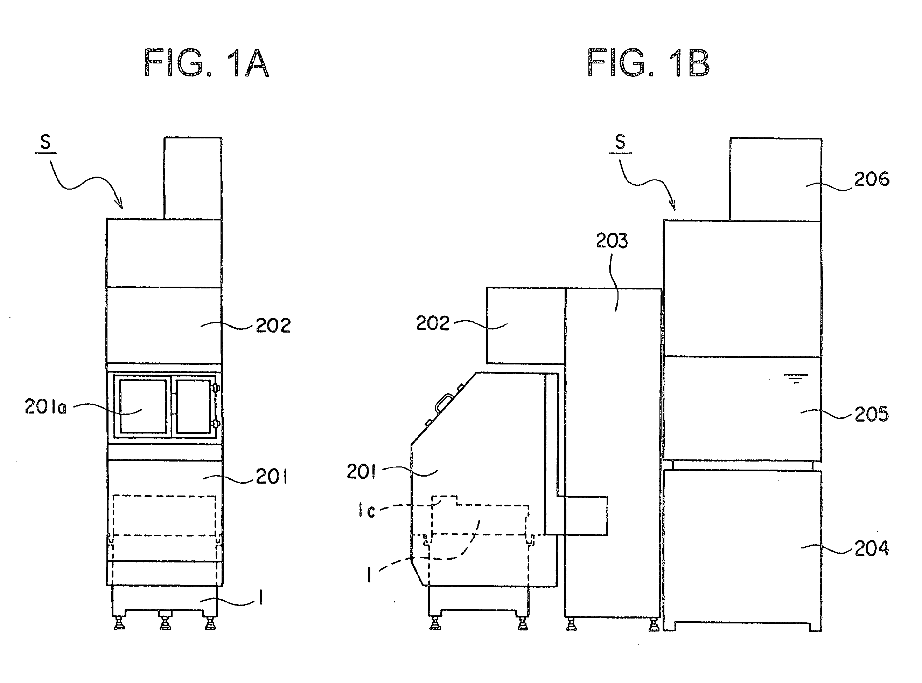

An embodiment of the present invention will be described below with reference to FIG. 1 to FIG. 8.

It will be noted that members, placements, etc. described below are not intended to limit the present invention and can be variously modified within the scope of the appended claims.

First, the overall configuration of a grinding device in which a rotary flow-through joint in the embodiment of the present invention is used as a grindstone spindle will be described with reference to FIG. 1.

A grinding device S in the embodiment of the present invention is a device particularly whose overall exterior and dimensions are extremely reduced as compared to those of a conventional device, and a width W of the front side of the grinding device S has a slenderness of 0.8 m, or roughly about 1/3 the conventional width (see FIG. 1(A)). Further, a depth L of the grinding device S is 2 m and somewhat smaller than conventionally (see FIG. 1(B)). In this manner, particularly because the width of the front of the grinding device S is miniaturized, the installation space of the grinding device S can be significantly reduced as compared to conventionally. What enables this size reduction is the structure of a workpiece grinding portion whose details will be described later.

The grinding device S of the present invention is broadly divided into and configured by a body section 201 in which grindstones that perform grinding of workpieces and the like are disposed, a console panel 202 that is disposed above the body section 201 and sets grinding amounts and the like, a control panel 203 in which an electronic circuit that performs control of the grinding operation and the like on the basis of the setting data of the console panel 202 and the like is housed and which is disposed behind the console panel 202, a filtration device 204 that is disposed behind the control panel 203 and performs filtration of hydrostatic-cum-cooling-use oil that has been recovered, a hydraulic device 205 that is disposed so as to be stacked on this filtration device 204 and controls the pressure of the hydrostatic-cum-cooling oil, and a mist collector 206 that is disposed so as to be stacked on this hydraulic device 205 and collects the hydrostatic-cum-cooling oil that has been released in a mist form into the air.

In the upper portion of the front of the body section 201, a front door 201a is disposed such that it can be opened and closed, and work such as attaching a workpiece to or detaching a workpiece from a chuck (not shown) for workpiece holding disposed inside can be performed by opening and closing the front door 201a.

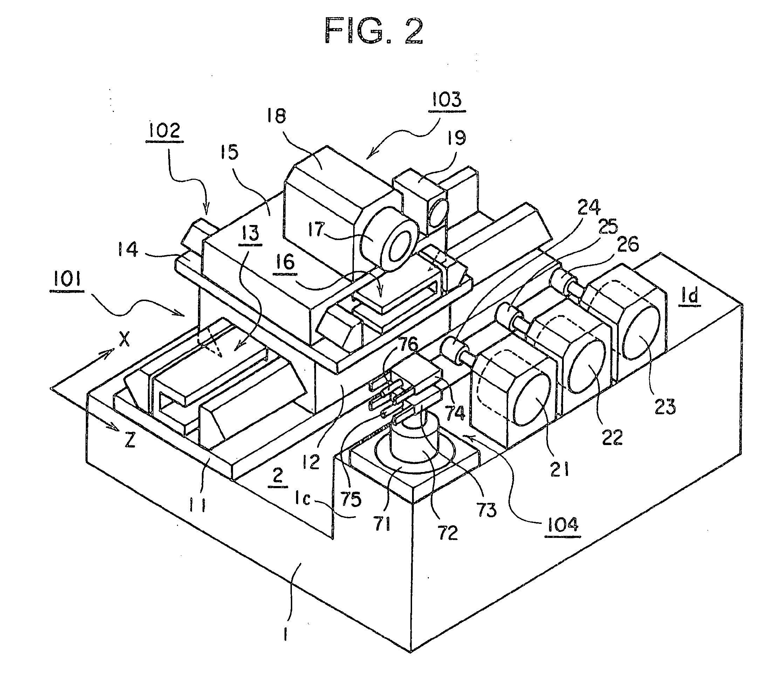

In FIG. 2, there is shown a configuration example of main portions of the grinding device S that are housed and disposed inside the body section 201, and that configuration example will be described below with reference to the same drawing.

On the bottom portion side of the body section 201, there is disposed a bed 1 that serves as a mount portion, and on a slide installation surface 2 that is a horizontal surface formed on this bed 1, there are disposed first and second slide portions 101 and 102 that serve as first and second slide means and a workpiece holding portion 103 that serves as workpiece holding means. It will be noted that it is preferable for the bed 1 to be formed using low thermal expansion cast metal from the standpoint of keeping thermal displacement to a minimum.

The planar exterior shape of the bed 1 in the embodiment of the present invention has a roughly square shape, but a step portion 1c that is higher than the slide installation surface 2 is formed along one side of the bed 1, and first to third grindstone spindles 21 to 23 and the like are disposed on a top portion 1d of the step portion 1c.

On the slide installation surface 2, there is disposed the first slide portion 101. This first slide portion 101 is broadly divided into and configured by a first base plate 11 that is fixedly disposed on so as to be joined to the slide installation surface 2, a first table plate 12 that is disposed so as to face this first base plate 11, and a linear motor 13 that is disposed between the first base plate 11 and the first table plate 12.

In the embodiment of the present invention, the overall exterior shape of the first base plate 11 is roughly rectangular, and the long sides thereof are set to be substantially the same length as that of the one side of the bed 1 on the opposite side of the step portion 1c (see FIG. 2).

Further, the width of the first table plate 12 is substantially the same as the short sides of the first base plate 11, but the length of the sides of the first table plate 12 in the direction orthogonal to the short sides is roughly about 1/3 to 2/3 the long sides of the first base plate 11, and, as described later, it is ensured that reciprocal movement of the first table plate 12 along the long sides of the first base plate 11 becomes easy.

It will be noted that, although its details are omitted, a so-called hydrostatic bearing is formed between the first table plate 12 and the first base plate 11, and the first table plate 12 receives the driving force of the linear motor 13, is guided parallel to the long sides of the first base plate 11, and is capable of reciprocal movement.

Here; the direction in which the first table plate 12 reciprocally moves-or in other words, the direction orthogonal to the axial direction of a main shaft 18-will appropriately be called an X-axis direction in 3-dimensional coordinates represented by X, Y and Z axes (see FIG.2).

Additionally, on the first table plate 12, the second slide portion 102 is disposed such that it is placed thereon.

The basic structure of this second slide portion 102 is the same as that of the first slide portion 101 in that the second slide portion 102 is broadly divided into and configured by a second base plate 14, a second table plate 15 that is disposed so as to face this second base plate 14, and a linear motor 16 that is disposed between the second base plate 14 and the second table plate 15.

The width-that is, the length in the X-axis direction-of the second base plate 14 in the embodiment of the present invention is set to be substantially equal to the length of the first table plate 12 in the X-axis direction, and the length of the second base plate 14 in the direction orthogonal to the X axis in a horizontal plane including the X axis or in other words the axial direction of the main shaft 18 (hereinafter, this direction will appropriately be called a Z-axis direction) is somewhat longer than the length of the first table plate 12 in the Z-axis direction.

The width-that is, the length in the X-axis direction-of the second table plate 15 is set to be substantially equal to the length of the second base plate 14 in the X-axis direction, and the length of the second table plate 15 in the Z-axis direction is set to be somewhat shorter than the length of the second base plate 14 in the Z-axis direction.

Additionally, like the first table plate 12, a hydrostatic bearing is formed between the second table plate 15 and the second base plate 14, whereby the second table plate 15 receives the driving force of the linear motor 16, is guided parallel to the long sides of the first table plate 12, and is capable of reciprocal movement in the Z-axis direction.

Moreover, the workpiece holding portion 103 is placed on the second table plate 15.

That is, the workpiece holding portion 103 is configured from a chuck 17 that detachably holds an unillustrated workpiece and the main shaft 18 that has a motor (not shown) inside and holds the chuck 17 such that the chuck 17 may freely rotate.

In the embodiment of the present invention, the main shaft 18 and the chuck 17 are fixed to and disposed on the second table plate 15 such that the chuck 17 projects in the direction of the step portion 1c from the edge of the second table plate 15 positioned on the side of the step portion 1c formed on the bed 1.

Further, on the second table plate 15 in the vicinity of the workpiece holding portion 103, there is fixed and disposed a dressing spindle 19 so that dressing work of later-described first to third grindstones 24 to 26 can be performed.

The first to third grindstone spindles 21 to 23 are fixed to, and disposed an appropriate interval apart from each other in the X-axis direction on, the top portion 1d of the step portion 1c. A first grindstone 24, a second grindstone 25 and a third grindstone 26 are rotatably attached to these first to third grindstone spindles 21 to 23 respectively, and the first to third grindstone spindles 21 to 23 are fixedly disposed on the step portion 1c such that the first to third grindstones 24 to 26 face the workpiece holding portion 103. In other words, the first to third grindstone spindles 21 to 23 are disposed such that their axial directions coincide with the Z-axis direction of the 3-dimensional coordinates (see FIG. 2).

In the embodiment of the present invention, the bed 1 is placed such that this step portion 1c is on the front side of the device, that is, on the front side of the body section 201, so that a worker can perform work such as attaching and detaching workpieces and attaching and replacing the first to third grindstones 24 to 26 via the front door 201a (FIG. 1 and FIG. 2).

Further, on the step portion 1c, a loading device 104 for changing workpieces is disposed in the vicinity of these first to third grindstone spindles 21 to 23.

The loading device 104 in the embodiment of the present invention has, as its main components, a revolving cylinder 71, an up-and-down cylinder 72 and two air chucks 73 and 74.

The revolving cylinder 71 disposed on the step portion 1c is configured to be rotatable in a horizontal plane, and the up-and-down cylinder 72 is placed on this revolving cylinder 71.

The up-and-down cylinder 72 is configured such that it can move up and down in the vertical direction, and the first and second air chucks 73 and 74 are disposed so as to be stacked on this up-and-down cylinder 72.

According to this configuration, loading and unloading work can be performed at an appropriate position with respect to the chuck 17 because of the revolution of the revolving cylinder 71 and the up-and-down movement of the up-and-down cylinder 72.

Further, in the embodiment of the present invention, a first gauge head 76 for seat depth measurement is attached at an appropriate position to the first air chuck 74, and a second gauge head 75 for inner diameter postproduction measurement is attached at an appropriate position to the second air chuck 73, and the gauge heads 75 and 76 are configured to be capable of measuring at the time of loading.

In this configuration, the work of grinding an unillustrated workpiece is done by first attaching the workpiece (not shown) to the chuck 17 and then performing setting corresponding to the desired grinding on the console panel 202. Then, when an unillustrated start switch is pressed, the first to third grindstones 24 to 26 are appropriately selected and grinding is performed while the first table plate 12 is reciprocally moved in the X-axis direction and the second table plate 15 is reciprocally moved in the Z-axis direction in accordance with the desired grinding by control from the control panel 203.

It will be noted that, in the embodiment of the present invention, the first grindstone 24 is provided for inner diameter grinding, the second grindstone 25 is provided for seat grinding, and the third grindstone 26 is provided for end surface grinding.

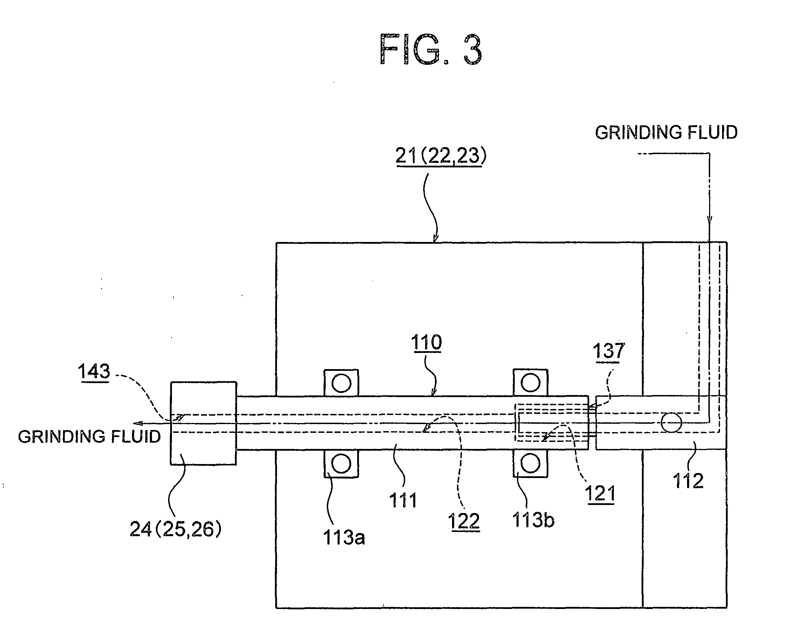

Next, the more specific configurations of the first to third grindstone spindles 21 to 23 will be described with reference to FIG. 3 to FIG. 8.

The first to third grindstone spindles 21 to 23 in the embodiment of the present invention all comprise a rotary flow-through joint and all have the same basic configuration, so in the description of the rotary flow-through joint below, reference numerals for the components will be used in common without separating them for each of the grindstone spindles 21 to 23.

First, to describe the overall configuration with reference to FIG. 3, each of the first to third grindstone spindles 21 to 23 in the embodiment of the present invention uses a rotary flow-through joint 110 that is broadly divided into and configured by a shaft (a rotating member) 111 and a fixed shaft (a non-rotating member) 112.

The rotary flow-through joint 110 is a joint where one end of the fixed shaft 112 is inserted into one end side of the shaft 111, both of whose end portion vicinities are rotatably supported by bearings 113a and 113b, such that the shaft 111 may freely rotate and where a grinding fluid supplied from the fixed shaft 112 side flows inside and is capable of being released to a working point of a workpiece (not shown) via the insides of the grindstones 24 to 26 (details described later). It will be noted that coolant may also be used instead of the grinding fluid.

It will be noted that, in FIG. 3, from the standpoint of making the drawing easier to see and facilitating understanding, detailed illustration of a grinding fluid flow-through path 131, a drain passage 132 and an air passage 133 described later that are disposed inside the fixed shaft 112 is omitted and only the rough positions where these three are disposed are indicated by dotted lines.

The shaft 111 comprises a circular column-shaped member, and on one end portion side thereof, a connection-use recess portion 121 is disposed as a bottomed cylindrical recess in the axial direction. Further, inside the shaft 111, a shaft flow-through path 122 of an appropriate inner diameter is formed in the axial direction in a hollow manner centered about the axial center of the shaft 111, with one end portion of the shaft flow-through path 122 opening to the bottom portion of the connection-use recess portion 121 and the other end of the shaft flow-through path 122 opening to the end surface of the shaft 111 on the opposite side of the connection-use recess portion 121.

Additionally, the grindstones 24 to 26 are detachably attached to the end portion of the shaft 111 on the opposite side of the end portion side where the connection-use recess portion 121 is formed. A grindstone flow-through path 143 is drilled inside the grindstones 24 to 26 so as to be communicated with the shaft flow-through path 122.

It will be noted that the shaft 111 is driven to rotate by an unillustrated motor.

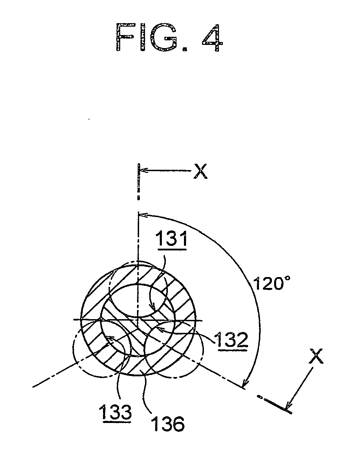

Next, the fixed shaft 112 will be described with reference to FIG. 4 to FIG. 8.

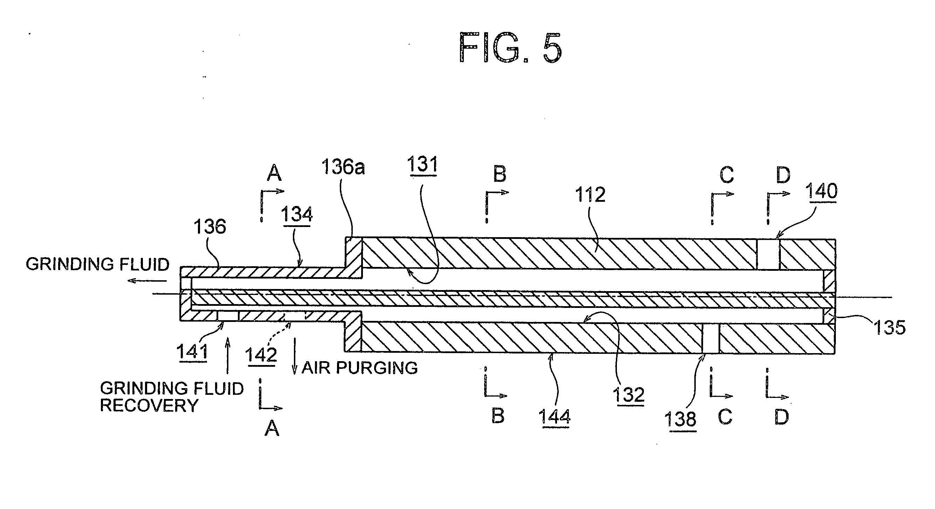

First, the fixed shaft 112 in the embodiment of the present invention comprises a cylindrical member in which are formed an insertion connection portion 134 (details described later) that is inserted into the connection-use recess portion 121 and a non-insertion portion 144 that follows this insertion connection portion 134 and is positioned outside the connection-use recess portion 121, with a grinding fluid flow-through path (a non-rotating member flow-through path) 131, a drain passage 132 and an air-use passage 133 being formed inside the fixed shaft 112 as described later. Additionally, the insertion connection portion 134 is formed in a smaller diameter than the non-insertion portion 144 (see FIG. 4 and FIG. 5).

It will be noted that FIG. 4 is a radial direction cross section of the insertion connection portion 134-or in other words, a sectional view of the insertion connection portion 134 along line A-A shown in FIG. 5.

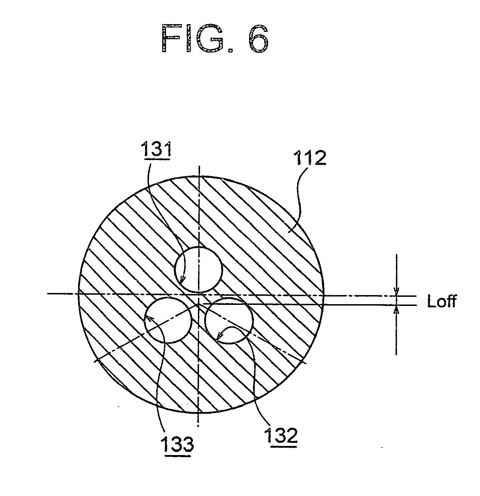

That is, the fixed shaft 112 in the embodiment of the present invention is configured such that three passages of the same diameter-that is, the grinding fluid flow-through path 131, the drain passage 132 and the air-use passage 133-are formed inside the circular cylinder-shaped member in the axial direction thereof at intervals of 120 degrees apart from each other in the circumferential direction of the fixed shaft 112 centered about a predetermined point (see FIG. 4 and FIG. 6). The center (predetermined point) of the grinding fluid flow-through path 131, the drain passage 132 and the air-use passage 133 in the radial direction cross section of the fixed shaft 112 is set in a position off-centered a predetermined distance Loff in the radial direction from the axial center of the fixed shaft 112 and specifically is off-centered in a direction where the grinding fluid flow-through passage 131 nears the axial center of the fixed shaft 112 (see FIG. 6).

This is to make the radial direction cross-sectional area of the grinding fluid flow-through path 131 in the insertion connection portion 134 large in comparison to the other two passages 132 and 133 because the insertion connection portion 134 has a smaller diameter than the non-insertion portion 144.

It will be noted that appropriate sizes should be set for an inner diameters of the grinding fluid flow-through path 131, the drain passage 132 and the air-use passage 133 in consideration of the outer diameter of the fixed shaft 112 and the required grinding fluid amount, that is, depending on individual conditions required of the grinding device, and the inner diameters of the grinding fluid flow-through path 131, the drain passage 132 and the air-use passage 133 are not limited to particular sizes.

One end surface side of the fixed shaft 112 is closed off by a lid member 135 formed in a disc shape (see FIG. 5).

As for the end portion side of the fixed shaft 112 on the opposite side of the end portion closed off by the lid member 135, imagining a predetermined inner diameter circle centered about the axial center of the fixed shaft 112, the site outside that imaginary inner diameter circle is clipped, that portion is capped by an insertion connection portion formation-use cylindrical body 136, and the insertion connection portion 134 of a smaller diameter than the non-insertion portion 144 is formed (see FIG. 4 and FIG. 5). Additionally, the axial direction length of the insertion connection portion 134 is set to be slightly longer in comparison to the connection-use recess portion 121.

Here, the diameter of the aforementioned imaginary inner diameter circle is of a size where part of the radial direction circular cross sections of the grinding fluid flow-through path 131, the drain passage 132 and the air-use passage 133 are clipped, but that size is decided in consideration of the cross-sectional area of the grinding fluid flow-through path 131 required in this insertion connection portion 134 and the thickness (the difference between the outer diameter and the inner diameter) required of the insertion connection portion formation-use cylindrical body 136.

The insertion connection portion formation-use cylindrical body 136 is a body where an annular flange 136a is integrally formed and disposed on one end side of a hollow circular cylinder-shaped member, and the flange 136a is joined by welding, for example, to the end surface that arises when part of the fixed shaft 112 is clipped as described above.

The outer diameter of the insertion connection portion formation-use cylindrical body 136 is set to be somewhat smaller than the inner diameter of the connection-use recess portion 121 to the extent that a minute gap 137 arises between the insertion connection portion formation-use cylindrical body 136 and the connection-use recess portion 121 of the shaft 111 because it is necessary to ensure that this portion is inserted into the connection-use recess portion 121 of the shaft 111 and that it does not impede the rotation of the shaft 111 (see FIG. 3).

Further, the inner diameter of the insertion connection portion formation-use cylindrical body 136 becomes the same as the aforementioned imaginary inner diameter circle.

Moreover, the diameter of the flange 136a matches the outer diameter of the non-insertion portion 144.

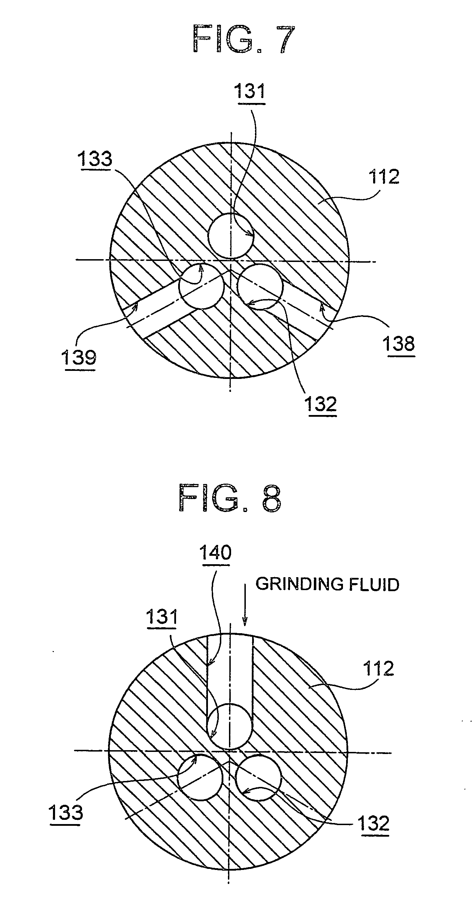

Further, a drain-use discharge communication path 138 that allows the drain passage 132 to be communicated with the outside and an air supply communication path 139 that allows the air-use passage 133 to be communicated with the outside are formed in the fixed shaft 112 in the radial direction thereof at appropriate positions near the end portion where the lid member 135 is disposed (see FIG. 5 and FIG. 7). In the embodiment of the present invention, the drain-use discharge communication path 138 and the air supply communication path 139 are disposed in the same position in the axial direction.

Grinding fluid that has been recovered on the insertion connection portion 134 side as described later is discharged to the outside from the aforementioned drain-use discharge communication path 138.

Further, a connection tube (not shown) from an unillustrated air pump or the like that feeds pressure-fed air is connected, such that the pressure-fed air is supplied, to the air supply communication path 139.

A grinding fluid supply communication path 140 that allows the grinding fluid flow-through path 131 to be communicated with the outside is formed in the radial direction of the fixed shaft 112 in a position near the drain-use discharge communication path 138 and the air supply communication path 139 and towards the lid member 135 (see FIG. 5 and FIG. 8).

A connection tube (not shown) from the hydraulic device 205 (see FIG. 1) is connected, such that the grinding fluid is supplied, to this grinding fluid supply communication path 140.

A grinding fluid recovery communication path 141 that allows the drain passage 132 to be communicated with the outside and an air release-use communication path 142 that allows the air-use passage 133 to be communicated with the outside are formed in the insertion connection portion 134 in the radial direction thereof.

The grinding fluid recovery communication path 141 and the air release-use communication path 142 are disposed an appropriate interval apart from each other in the axial direction such that the grinding fluid recovery communication path 141 is on the opposite side of the flange 136a of the insertion connection portion 134 (see FIG. 5).

Next, the overall action, functions, etc. of the first to third grindstone spindles 21 to 23 in the above-described configuration will be described.

First, the shaft 111 of each of the first to third grindstone spindles 21 to 23 is driven to rotate by an unillustrated motor.

Then, at the time of grinding work, the grinding fluid is pressure-fed and supplied from the hydraulic device 205 via the grinding fluid supply communication path 140 to the grinding fluid flow-through path 131.

It will be noted that, in the embodiment of the present invention, the grinding fluid doubles as hydrostatic oil in a hydrostatic mechanism, but because it is not something relating to the essence of the rotary flow-through joint, detailed description thereof will be omitted.

The grinding fluid flowing into the grinding fluid flow-through path 131 via the grinding fluid supply communication path 140 is pressure-fed toward the insertion connection portion 134, flows out from the open end of the insertion connection portion 134, and flows into the shaft flow-through path 122 of the shaft 111. Then, the grinding fluid is pressure-fed through the inside of this shaft flow-through path 122 toward the distal end portion of the shaft 111-that is, toward the open portion of the shaft flow-through path 122 in the end surface on the opposite side of the side where the connection-use recess portion 121 is formed-and is released to a working point of an unillustrated workpiece via the grindstone flow-through path 143 of the grindstones 24 to 26 attached to the distal end portion of this shaft 111 (see FIG. 3 and FIG. 5).

An extremely small amount of the grinding fluid that is pressure-fed through the grinding fluid flow-through path 131 of the fixed shaft 112 and flows out from the open end of the insertion connection portion 134 as described above flows into the minute gap 137 between the insertion connection portion 134 and the connection-use recess portion 121, but because of air purging, it does not flow out to the outside from the open side of the connection-use recess portion 121 but rather flows into the drain passage 132 from the grinding fluid recovery communication path 141 and is released to the outside via the drain-use discharge communication path 138. Then, the grinding fluid that has been released to the outside via the drain-use discharge communication path 138 flows on the bed 1, for example, runs off and is recovered in a pan (not shown) disposed on the bed 1, and is sent to the filtration device 204 for reutilization.

That is, the pressure-fed air supplied from the outside via the air supply communication path 139 passes through the air-use passage 133 and is fed into the minute gap 137 via the air release-use communication path 142, so even when the grinding fluid enters the minute gap 137, it is pushed back toward the grinding fluid recovery communication path 141 by the pressure-fed air from the air release-use communication path 142, so outflow from the open side of the connection-use recess portion 121 to the outside is prevented.

In the embodiment of the present invention, the grinding fluid flow-through path 131, the drain passage 132 and the air-use passage 133 are formed inside the fixed shaft 112 parallel to each other in the axial direction and are placed at equidistant intervals of 120 degrees in the axial-circumferential direction, and in the insertion connection portion 134, in order to ensure that the radial direction cross section of the grinding fluid flow-through path 131 can be secured large in comparison to the drain passage 132 and the air-use passage 133, the placement thereof is shifted in the radial direction and the outer diameter of the insertion connection portion 134 is set small, so the relative circumferential velocity with the shaft 111 in the insertion connection portion 134 is suppressed and the configuration is suited to high-speed rotation of the shaft 111.

In the embodiment of the present invention, the outer diameter of the insertion connection portion 134 is a size that is roughly about 70% the conventional size.

The present invention provides a rotary flow-through joint that can be equipped with plural flow-through paths for a grinding fluid or the like and enables high-speed rotation without having to increase a shaft diameter, so the present invention can be applied to a grinding device particularly in which there is a request for high-speed rotation spindles.

## Claims

1. A rotary flow-through joint (110) equipped with a rotating member (111) that is supported by bearings (113a, 113b) such that it may freely rotate and a non-rotating member (112) that is fixed with respect to rotation of the rotating member, the rotary flow-through joint being configured so as to be capable of releasing, from an end portion of the rotating member, a liquid supplied via the non-rotating member to the rotating member, **characterized in that**
in the non-rotating member (112), a grinding fluid flow-through path (131), a drain passage (132), and an air-use passage (133) are formed inside along a longitudinal direction, and in a small-diameter insertion connection portion (134) formed on one end portion side of the non-rotating member that is inserted into the rotating member, the area of cross section in radial direction of the grinding fluid-flow-through path (131) in the insertion connection portion (134) is set so as to be larger than the area of cross section
in radial direction of the other two passages (132, 133).

2. The rotary flow-through joint (110) of claim 1
wherein
the rotating member (111) and the non-rotating member (112) are placed in an interconnected state on one
end portion side of the rotating member as a result of a columnar insertion connection portion (134) formed on one end portion side of the non-rotating member (112) being inserted, such that rotation of the rotating member (111) becomes possible, into a connection-use recess portion (121) disposed as a bottomed cylindrical recess in an axial direction of the rotating member (111),
in the rotating member (111), there is formed a rotating member flow-through path (122) that opens to a bottom portion of the connection-use recess portion (121) and also opens to an end portion on the opposite side of the end portion where the connection-use recess portion (121) is disposed to enable circulation of the liquid,
and
the non-rotating member (112) comprises the insertion connection portion (134) that is inserted into the connection-use recess portion (121) and a non-insertion portion (144) that is positioned outside the connection- use recess portion (121), with a non-rotating member flow-through path (131) that has an opening in the insertion connection portion (134) so as to face the opening on the connection-use recess portion (121) side of the rotating member flow-through path (131) and which enables supply of the liquid from the outside being formed in an axial direction of the non-rotating member (112), and with a drain passage (132) that recovers the liquid from a gap (137) arising between the connection insertion portion (134) and the connection-use recess portion (121) and an air-use passage (133) that enables air pressure-fed and supplied from the outside to be released into the gap (137) being disposed in parallel to the non-rotating member flow-through path (131), and with the insertion connection portion (134) being formed in a small diameter with respect to the non-insertion portion.

3. The rotary flow-through joint (110) according to claim 2, wherein
the non-rotating member (112) comprises a columnar member, with the non-rotating member flow-through path (131), the drain passage (132) and the air-use passage (133) being formed inside the columnar member in the axial direction thereof at equal angles apart from each other in the circumferential direction and taking as their axial center a position off-centered from the axial center of the columnar member, and
one end portion side of the columnar member which serves as the insertion connection portion (134) is configured such that an inner diameter circle centered about the axial center of the columnar member is set in a small diameter so as to clip part of the cross sections of the non-rotating member flow-through path (131), the drain passage (132) and the air-use passage (133).

4. The rotary flow-through joint (110) according to claim 3, wherein the insertion connection portion (134) is configured such that, in a site on the one end portion side of the columnar member which is to serve as the insertion connection portion, a portion going over the inner diameter circle centered about the axial center of the columnar member and set so as to clip part of the cross sections of the non-rotating member flow-through path (131), the drain passage (132) and the air-use passage (133) is removed, and that the portion is capped by a hollow circular cylinder-shaped member having the inner diameter circle.

5. A grinding device (S) configured so as to be capable of supplying a grinding fluid via a grindstone spindle (21-23) and a grindstone (24-26) to a working portion of a workpiece resulting from the grindstone, **characterised in that**
the grindstone spindle comprises a rotary flow-through joint (110) according to claim 2.

6. The grinding device (S) according to claim 5, wherein
the non-rotating member comprises a columnar member, with a first circular cylinder-shaped passage that forms the non-rotating member flow-through path (131), a second circular cylinder-shaped passage that forms the drain passage (132) and a third circular cylinder-shaped passage that forms the air-use passage (133) being formed inside the columnar member in the axial direction thereof at equal angles apart from each other in the circumferential direction and taking as their axial center a position off-centered from the axial center of the columnar member, and
one end portion side of the columnar member which serves as the insertion connection portion is configured such that an inner diameter circle centered about the axial center of the columnar member is set in a small diameter so as to clip part of the cross sections of the first to third circular cylinder-shaped passages.

7. The grinding device(s) according to claim 6, wherein the insertion connection portion (134) is configured such that, in a site on the one end portion side of the columnar member which is to serve as the insertion connection portion (134), a portion going over the inner diameter circle centered about the axial center of the columnar member and set so as to clip part of the cross sections of the first to third circular cylinder-shaped passages is removed, and that the portion is capped by a hollow circular cylinder-shaped member having the inner diameter circle.

## Patentansprüche

1. Rotierende Durchflussverbindung (110), die mit einem rotierenden Element (111), das durch Lager (113a, 113b) getragen wird, so dass es frei rotieren kann, und mit einem nicht rotierenden Element (112), das in Bezug auf die Rotation des rotierenden Elements fest ist, ausgerüstet ist, wobei die rotierende Durchflussverbindung so konfiguriert ist, dass sie aus einem Endabschnitt des rotierenden Elements eine Flüssigkeit freigeben kann, die über das nicht rotierende Element zum rotierenden Element zugeführt wird, **dadurch gekennzeichnet, dass**
im Inneren des nicht rotierenden Elements (112) ein Durchflussweg (131) für Schleifflüssigkeit, ein Abflussdurchlass (132) und ein Belüftungsdurchlass (133) entlang einer Längsrichtung gebildet sind und in einem Einschubverbindungsabschnitt (134) mit kleinem Durchmesser, der an einer Endabschnittsseite des nicht rotierenden Elements gebildet ist und der in das rotierende Element eingeführt wird, die Querschnittsfläche in radialer Richtung des Durchflusswegs für Schleifflüssigkeit (131) im Einschubverbindungsabschnitt (134) so eingestellt ist, dass sie größer ist als die Querschnittsfläche in radialer Richtung der anderen beiden Durchlässe (132, 133).

2. Rotierende Durchflussverbindung (110) nach Anspruch 1
wobei
das rotierende Element (111) und das nicht rotierende Element (112) als Folge eines säulenförmigen Einschubverbindungsabschnitts (134), der an einer Endabschnittsseite des nicht rotierenden Elements (112) gebildet ist und in einen zur Verbindung verwendeten Aussparungsabschnitt (121) eingeführt ist, der als eine unten liegende zylindrische Aussparung in axialer Richtung der rotierenden Elements (111) angeordnet ist, so dass die Rotation des rotierenden Elements (111) möglich wird, in einem miteinander verbundenen Zustand auf einer Endabschnittsseite des rotierenden Elements angeordnet sind,
im rotierenden Element (111) ein Durchflussweg (122) des rotierenden Elements gebildet ist, der sich zu einem unteren Abschnitt der zur Verbindung verwendeten Aussparungsabschnitts (121) öffnet und auch zu einem Endabschnitt an der gegenüber liegenden Seite des Endabschnitts öffnet, an dem der zur Verbindung verwendeten Aussparungsabschnitts (121) angeordnet ist, um die Zirkulation der Flüssigkeit zu ermöglichen, und
das nicht rotierende Element (112) den Einschubverbindungsabschnitt (134), der in den zur Verbindung verwendeten Aussparungsabschnitt (121) eingeführt ist, und einen nicht eingeführten Abschnitt (144), der außerhalb des zur Verbindung verwendeten Aussparungsabschnitts (121) positioniert ist, umfasst, mit einem Durchflussweg (131) des nicht rotierenden Elements, der eine Öffnung im Einschubverbindungsabschnitt (134) aufweist, so dass sie der Öffnung auf der Seite des zur Verbindung verwendeten Aussparungsabschnitts (121) des Durchflusswegs (131) des rotierenden Elements gegenüberliegt, die das Zuführen der Flüssigkeit von außen ermöglicht, indem sie in axialer Richtung des nicht rotierenden Elements (112) gebildet ist, und mit einem Abflussdurchlass (132), der die Flüssigkeit aus der Lücke (137) auffängt, die zwischen dem Einschubverbindungsabschnitt (134) und dem zur Verbindung verwendeten Aussparungsabschnitt (121) entsteht, und einem Belüftungsdurchlass (133), der es ermöglicht, dass Luft, die unter Druck eingespeist und von außen zugeführt wird, in die Lücke (137) strömen kann und der parallel zum Durchflussweg (131) des nicht rotierenden Elements angeordnet ist, wobei der Einschubverbindungsabschnitt (134) in Bezug auf den nicht eingeführten Abschnitt mit einem kleinen Durchmesser gebildet ist.

3. Rotierende Durchflussverbindung (110) nach Anspruch 2, wobei das nicht rotierende Element (112) ein säulenförmiges Element umfasst, wobei der Durchflussweg (131) des nicht rotierenden Elements, der Abflussdurchlass (132) und der Belüftungsdurchlass (133) innerhalb des säulenförmigen Elements in dessen axialer Richtung in gleichen Winkeln getrennt voneinander in Umfangsrichtung gebildet sind und als ihre Mittelachse eine Position annehmen, die zur Mittelachse des säulenförmigen Elements verschoben ist, und
eine Endabschnittsseite des säulenförmigen Elements, die als Einschubverbindungsabschnitt (134) dient, so konfiguriert ist, dass ein Kreis mit dem inneren Durchmesser, der um die Mittelachse des säulenförmigen Elements zentriert ist, in einem kleinen Durchmesser eingestellt ist, so dass er einen Teil der Querschnitte des Durchflusswegs (131) des nicht rotierenden Elements, des Abflussdurchlass (132) und des Belüftungsdurchlass (133) schneidet.

4. Rotierende Durchflussverbindung (110) nach Anspruch 3, wobei der Einschubverbindungsabschnitt (134) so konfiguriert ist, dass an einem Ort an der einen Endabschnittseite des säulenförmigen Elements, das als der Einschubverbindungsabschnitt dienen soll, ein Abschnitt entfernt ist, der sich über den Kreis mit dem inneren Durchmesser, der um die Mittelachse des säulenförmigen Elements zentriert ist, erstreckt und so eingestellt ist, dass er einen Teil der Querschnitte des Durchflusswegs (131) des nicht rotierenden Elements, des Abflussdurchlasss (132) und des Belüftungsdurchlasses (133) schneidet, und dass der Abschnitt durch ein hohles rundes zylinderförmiges Element abgedeckt wird, das den Kreis mit dem inneren Durchmesser aufweist.

5. Schleifvorichtung (S), die konfiguriert ist, um eine Schleifflüssigkeit über eine Schleifsteinspindel (21-23) und einen Schleifstein (24-26) zum Arbeitsabschnitt eines Werkstückes zu führen, der durch den Schleifstein entsteht, **dadurch gekennzeichnet, dass**
die Schleifsteinspindel eine rotierende Durchflussverbindung (110) nach Anspruch 2 umfasst.

6. Schleifvorrichtung (S) nach Anspruch 5, wobei
das nicht rotierende Element ein säulenförmiges Element umfasst mit einem ersten runden zylinderförmigen Durchlass, der den Durchflussweg (131) des nicht rotierenden Elements bildet, einem zweiten runden zylinderförmigen Durchlass, der den Abflussdurchlass (132) bildet, und einem dritten runden zylinderförmigen Durchlass, der den Belüftungsdurchlass (133) bildet, die innerhalb des säulenförmigen Elements in dessen axialer Richtung unter gleichen Winkeln getrennt voneinander in Umfangsrichtung gebildet sind und als ihre Mittelachse eine Position annehmen, die zur Mittelachse des säulenförmigen Elements verschoben ist, und
eine Endabschnittsseite des säulenförmigen Elements, die als Einschubverbindungsabschnitt dient, so konfiguriert ist, dass ein Kreis mit dem inneren Durchmesser, der um die Mittelachse des säulenförmigen Elements zentriert ist, in einem kleinen Durchmesser eingestellt ist, so dass er einen Teil der Querschnitte der ersten bis dritten zylinderförmigen Durchlässe schneidet.

7. Schleifvorrichtung(en) nach Anspruch 6, wobei der Einschubverbindungsabschnitt (134) so konfiguriert ist, dass an einem Ort an der einen Endabschnittseite des säulenförmigen Elements, das als der Einschubverbindungsabschnitt (134) dienen soll, ein Abschnitt entfernt ist, der sich über den Kreis mit dem inneren Durchmesser, der um die Mittelachse des säulenförmigen Elements zentriert ist, erstreckt und so eingestellt ist, dass er einen Teil der Querschnitte der ersten bis dritten zylinderförmigen Durchlässe schneidet, und dass der Abschnitt durch ein hohles rundes zylinderförmiges Element abgedeckt wird, das den Kreis mit dem inneren Durchmesser aufweist.

## Revendications

1. Raccord tournant à écoulement traversant (110) équipé d'un élément tournant (111) porté par des paliers (113a, 113b) pour tourner librement et un élément non-tournant (112) fixe par rapport à la rotation de l'élément tournant, le raccord tournant à écoulement traversant étant configuré pour pouvoir être détaché d'une partie d'extrémité de l'élément tournant, un liquide étant fourni à l'élément tournant à travers l'élément non-tournant,
raccord **caractérisé en ce que**
l'élément non-tournant (112) comporte un chemin de traversée de liquide de meulage (131), un passage de drainage (132) et un passage d'air (133) réalisés dans la direction longitudinale et dans une partie de connexion par insertion (134) de petit diamètre, formée à une extrémité de l'élément non-tournant, qui s'introduit dans l'élément tournant, la surface de la section dans la direction radiale de l'écoulement traversant de fluide de meulage (131) dans la partie de connexion par insertion (134) est plus grande que la surface de la section dans la direction radiale et autres deux passages (132, 133).

2. Raccord tournant à écoulement traversant (110) selon la revendication 1, **caractérisé en ce que**
l'élément tournant (111) et l'élément non-tournant (112) sont interconnectés à une extrémité de l'élément tournant par la partie tubulaire de connexion par insertion (134) réalisée à une extrémité de l'élément non-tournant (112) qui est insérée de façon à permettre la rotation de l'élément tournant (111), dans la cavité de connexion (121) de la cavité cylindrique avec fond dans la direction de l'élément tournant (111),
un chemin d'écoulement traversant (122) étant réalisé dans l'élément tournant (111) pour déboucher dans la partie de fond dans la cavité de connexion (121) et déboucher également dans la partie d'extrémité du côté opposé dans la partie d'extrémité de la cavité de connexion (121) pour permettre la circulation du liquide, et
l'élément non-tournant (112) comprend la partie de connexion par insertion (134) qui s'introduit dans la cavité de connexion (121) et une partie de non-insertion (144) extérieure à la partie de cavité de connexion (121) avec un chemin pour écoulement traversant dans l'élément non-tournant (131) qui s'ouvre dans la partie de connexion par insertion (134) pour être face à l'ouverture de la cavité de connexion (121) et du côté du chemin d'écoulement traversant (131) dans l'élément tournant et qui permet de fournir du liquide à partir de l'extérieur dans la direction axiale de l'élément non-tournant (112) et avec un passage de drainage (132) qui récupère le liquide de l'intervalle (137) entre la partie de connexion par insertion (134) et la cavité de connexion (121) et un passage d'air (133) qui permet l'alimentation en air comprimé et la fourniture de l'extérieur pour être libéré dans l'intervalle (137) parallèle au chemin d'écoulement traversant (131) de l'organe non-tournant et avec la partie de connexion par insertion (134) à petit diamètre par rapport à la partie non insérée.

3. Raccord tournant à écoulement traversant (110) selon la revendication 2, **caractérisé en ce que**
l'élément non-tournant (112) comporte un élément tubulaire avec le chemin pour l'écoulement traversant (131) de cet élément non-tournant, le passage de drainage (132) et le passage d'air (133) réalisés dans l'élément en forme de colonne dans sa direction axiale, avec une répartition équi-angulaire l'un de l'autre dans la direction périphérique avec leur axe décentré par rapport à la ligne axiale de l'élément en forme de colonne, et
un côté d'extrémité de l'élément en forme de colonne sert de partie de connexion par insertion (134) en étant configuré pour le cercle de diamètre intérieur centré sur le centre axial de l'élément en forme de colonne s'introduise dans un plus petit diamètre pour clipper une partie de la section de l'élément non-tournant du chemin traversant (131), le passage de drain (132) et le passage d'air (133).

4. Raccord tournant à écoulement traversant (110) selon la revendication 3, **caractérisé en ce que**
la partie de connexion par insertion (134) est configurée de façon à placer sur un côté d'extrémité de l'élément en forme de colonne qui sert de partie de connexion par insertion, une partie dépassant le cercle de diamètre intérieur centré sur la direction axiale de l'élément en forme de colonne et permettre de clipper une partie des sections du chemin d'écoulement traversant (131) de l'élément non-tournant, le passage de drain (132) ainsi que le passage d'air (133) pour être enlevé et que la partie soit couverte par un élément en forme de cylindre circulaire creux ayant un cercle de diamètre intérieur.

5. Dispositif de meulage (S) permettant de fournir un liquide de meulage par une broche de meule (21-23) ainsi qu'une meule (24-26) à une partie d'usinage d'une pièce résultant de la meule,
**caractérisé en ce que**
la broche de meule comporte un raccord tournant à écoulement traversant (110) selon la revendication 2.

6. Dispositif de meulage (S) selon la revendication 5,
**caractérisé en ce que**
l'élément non-tournant comporte un élément en forme de colonne avec un premier passage cylindrique circulaire qui constitue le chemin d'écoulement traversant (131) de l'élément non-tournant, un second passage de forme cylindrique circulaire qui constitue de passage de drain (132) et un troisième passage de forme cylindrique de section circulaire qui constitue le passage d'air (133) à l'intérieur de l'élément en forme de colonne, dans la direction axiale de celui-ci, avec une répartition équi-angulaire d'un passage à l'autre dans la direction périphérique et prenant comme centre axial une position décentré par rapport au centre axial de l'élément en forme de colonne, et
un côté de la partie d'extrémité de l'élément en forme de colonne sert de partie de connexion pour insertion, configurée pour qu'un cercle de diamètre intérieur centré sur le centre axial de l'élément en forme de colonne soit mis dans un petit diamètre de façon à clipper les parties de section du premier au troisième passage de forme cylindrique et de forme circulaire.

7. Dispositif de meulage selon la revendication 6,
**caractérisé en ce que**
la partie de connexion par insertion (134) est configurée pour qu'à l'endroit sur un côté de partie d'extrémité de l'élément en forme de colonne qui sert à l'insertion de la partie de connexion (134), on enlève une partie dépassant le cercle de diamètre intérieur centré sur le centre axial de l'élément en forme de colonne et mise pour clipper des parties des sections du premier au troisième passage cylindrique circulaire et que la partie soit couverte par un élément de forme cylindrique à section circulaire creux, ayant le cercle de diamètre intérieur.
